# EUROPÄISCHE PATENTSCHRIFT

(11) **EP 0 722 052 B1**
(45) Veröffentlichungstag und Bekanntmachung des Hinweises auf die Patenterteilung: **10.06.1998**
(21) Anmeldenummer: 95119373.9
(22) Anmeldetag: 08.12.1995
(51) Int. Cl.: F16G 1/28

(54) **Antriebsriemen**
Driving belt
Courroie de transmission

(30) Priorität: 13.01.1995 DE 19500897
(43) Veröffentlichungstag der Anmeldung: 17.07.1996
(73) Patentinhaber: PLASTO Textil-GmbH, 59469 Ense-Höingen (DE)
(72) Erfinder: Belz Karl-Heinz, 59755 Arnsberg (DE); Kelsch Hans-Jürgen, 58739 Wickede (DE)
(74) Vertreter: Fritz, Edmund Lothar, Dipl.-Chem.

(56) Entgegenhaltungen:
- EP-A- 0 221 851
- AT-A- 322 920
- DE-A- 2 949 897
- FR-A- 1 069 964
- FR-A- 1 171 523
- FR-A- 1 270 028
- PATENT ABSTRACTS OF JAPAN vol. 16, no. 438 (M-1309), 11.September 1992 & JP-A-41 051047 (MORITO KK), 25.Mai 1992,

## Beschreibung

Die vorliegende Erfindung betrifft einen Antriebsriemen der ein textiles Band umfaßt, an das in Längsrichtung in regelmäßigen Abständen quer zum textilen Band angeordnete Mitnahmeelemente angespritzt sind, die nach wenigstens einer Seite des textilen Bandes hin gegenüber dessen Ebene nach oben und/oder unten vorstehende Bereiche aufweisen.

Aus dem japanischen patent abstract M-1309 September 11, 1992VOL. 16/No. 438 ist beispielsweise ein Antriebsriemen der oben beschriebenen Art bekannt geworden. Der Erfinder dieses vorbekannten Antriebsriemens hatte bereits erkannt, daß es wichtig ist, zwischen dem textilen Band und den an dieses textile Band angespritzten Mitnahmeelementen einen sehr guten Verbund herzustellen. Die Mitnahmeelemente bestehen bei diesen bekannten Antriebsriemen aus einem synthetischen Harz, das beim Anspritzvorgang in die maschenartig strukturierte Oberfläche des textilen Bands, das ein Gewebe sein kann, eindringen soll. Der Kunststoff der Mitnahmeelemente befindet sich bei diesen bekannten Antriebsriemen nach dem Anspritzvorgang sowohl auf der Oberseite als auch auf der Unterseite des textilen Bandes. Das textile Band besteht jedoch aus einem recht dichten und vergleichsweise dicken Gewebe, das der Kunststoff der Mitnahmeelemente beim Anspritzvorgang nicht durchdringen kann.

Die Aufgabe der vorliegenden Erfindung besteht darin, einen Antriebsriemen der eingangs genannten Art zu schaffen, bei dem ein noch festerer Verbund zwischen dem Antriebsriemen und den Mitnahmeelementen erhalten wird, wobei der Antriebsriemen die aufgrund der Flexibilität des textilen Bandes gegebenen Eigenschaften beibehält.

Die Lösung dieser Aufgabe liefert ein erfindungsgemäßer Antriebsriemen der eingangs genannten Art mit den kennzeichnenden Merkmalen des Anspruchs 1. Erfindungsgemäß weist das textile Band, an das die Mitnahmeelemente angespritzt werden, wenigstens einen sich in Längsrichtung des textilen Bandes erstreckenden streifenartigen Bereich auf, in dem das Band geschwächt ist, so daß der Kunststoff der Mitnahmeelemente das textile Band in diesem geschwächten Bereich durchdringt. Der Kunststoff der Mitnahmeelemente befindet sich also nicht nur auf der Oberseite und auf der Unterseite des textilen Bandes sondern durchdringt dieses, so daß sich eine regelrechte Verzahnung zwischen den Mitnahmeelementen und dem textilen Band in dessen geschwächten Bereichen ergibt, was zu einem sehr hohen Verbund zwischen den Mitnahmeelementen und dem textilen Band führt, so daß der Antriebsriemen eine hohe Belastbarkeit aufweist.

Die herkömmlichen Kunststoff-Zahnriemen müssen aus einem flexiblen, relativ weichen Kunststoff bestehen, so daß der Zahnriemen ausreichend biegsam ist, damit die bei der Umlenkung des Zahnriemens erforderlichen Radien möglich sind. Der Riementeil des Zahnriemens, also derjenige Teil, der die Zähne untereinander verbindet, muß also flexibel sein, während die Zähne des Zahnriemens, die in Zahnräder oder dergleichen eingreifen, möglichst abriebfest sein müssen. Wegen dieser unterschiedlichen Anforderungen kann es nachteilig sein, daß Riemen und Zähne aus dem gleichen Material bestehen. Die herkömmlichen Kunststoff-Zahnriemen weisen außerdem im Regelfall eine relativ hohe Dehnung auf, so daß je nach Belastung die Länge des Zahnriemens variiert, was bei vielen Anwendungen als nachteilig anzusehen ist.

Durch die Erfindung wird ein Antriebsriemen geschaffen, bei dem der Riemen eine relativ geringe Dehnung aufweist, derjenige Teil, der die Kraft überträgt (Zahnfunktion), eine hohe Abriebfestigkeit hat, relativ große Kräfte mit dem Antriebsriemen übertragbar sind und dieser dabei gleichzeitig kostengünstig herstellbar ist.

Nach dem erfindungsgemäßen Gedanken ist der Antriebsriemen anders als ein herkömmlicher Zahnriemen aus Kunststoff nicht mehr einstückig, sondern als Riemen dient ein textiles Band, während statt der Zähne Mitnahmeelemente vorgesehen sind, die in Längsrichtung in regelmäßigen Abständen quer zum textilen Band angeordnet und an das textile Band angespritzt sind und dabei gegenüber der Ebene des textilen Bands nach oben oder nach unten hin vorstehende Bereiche aufweisen, so daß ein Eingriff eines Antriebselements in die Mitnahmeelemente möglich ist. Der durch das textile Band gebildete Riementeil des Antriebsriemens ist außerordentlich flexibel, so daß mit dem Antriebsriemen Umlenkungen mit sehr kleinen Radien möglich sind. Die Mitnahmeelemente, die an das textile Band angespritzt werden, können aus einem sehr harten Kunststoff bestehen. Das Anspritzen der Mitnahmeelemente erfolgt durch Spritzguß unter hohem Druck. Um dabei einen guten Verbund zwischen textilem Band und Mitnahmeelement zu erzeugen, erfolgt das Anspritzen vorzugsweise so, daß der beim Anspritzvorgang flüssige Kunststoff das Gewebe des textilen Bands durchdringt, so daß sich nach dem Erkalten ein sehr fester Verbund ergibt. Die Mitnahmeelemente stehen dann zu beiden Seiten, also nach oben und unten, gegenüber der Ebene des textilen Bandes zumindest in Teilbereichen vor. Wenn man für das textile Band ein ausreichend reißfestes Gewebe verwendet, kann dieses sehr flach ausgebildet werden.

Die Wirkseite des textilen Bandes an der der Eingriff des Antriebselements (zum Beispiel Zahnrad) in die Mitnahmeelemente des Antriebsriemens erfolgt, wird hierin nachfolgend als Oberseite des textilen Bands bezeichnet. In Längsrichtung des Antriebsriemens gesehen bilden die Mitnahmeelemente und die zwischen diesen angeordneten Abstände ein einem Zahnriemen ähnliches Profil. Für die Mitnahmeelemente können in Längsrichtung des Antriebsriemens gesehen die unterschiedlichsten Profile verwendet werden, zum Beispiel trapezförmige, dreieckige oder sonstige übliche Zahnprofile. Die Mitnahmeelemente können aber auch an der Eingriffseite (Oberseite) des Antriebsriemens abgerundet ausgebildet sein.

Um einen besonders guten Verbund zwischen dem textilen Band und den Mitnahmeelementen beim Anspritzvorgang zu erzeugen, verwendet man ein textiles Band, das sich in Längsrichtung erstreckende streifenartige Bereiche aufweist, in denen das Band geschwächt ist, so daß in diesen geschwächten Bereichen der Kunststoff der Mitnahmeelemente beim Anspritzen das textile Band besonders gut durchdringen kann. Es können mehrere parallele streifenartige geschwächte Bereiche dieser Art vorgesehen sein, die sich in Längsrichtung des textilen Bands erstrecken. Zwischen diesen geschwächten Bereichen des textilen Bands sind vorzugsweise verstärkte Bereiche vorgesehen, um die Reißfestigkeit des Bands zu erhöhen. Für einen geschwächten Bereich des textilen Bands kann man zum Beispiel ein einlagiges gitterartiges Gewebe, ein sogenanntes Monofil, verwenden. Für die verstärkten Bereiche des textilen Bands kann man zwei- oder mehrlagige Gewebe verwenden, vorzugsweise ist das Gewebe dort besonders dicht gewebt.

Gemäß einer bevorzugten Ausführungsform der Erfindung verwendet man in den verstärkten Bereichen zwei- oder mehrlagige Gewebeschläuche, die dann Verstärkungsfasern in sich aufnehmen. Solche schlauchförmigen Gewebe mit Verstärkungsfäden als Einlagen sind an sich aus dem Stand der Technik bekannt, zum Beispiel aus der DE-OS 2 949 897 und werden zum Beispiel für Sicherheitsgurte verwendet. Der Gewebeschlauch kann zum Beispiel aus Polyamid oder Polyester bestehen, während die Verstärkungsfasern aus Kohlenstoffasern oder anderen Fasern mit einer relativ geringen Dehnung bestehen. Die Verstärkungsfasern können zum Beispiel aus Aramiden oder hochfesten Polyethylen bestehen.

Gemäß einer bevorzugten Ausführungsform der Erfindung besteht das textile Band jeweils aus Streifen von verstärkten Bereichen und Streifen von geschwächten Bereichen, die sich abwechseln, zum Beispiel weist das textile Band einen mittleren verstärkten Bereich auf, zwei äußere verstärkte Bereiche und zwei jeweils zwischen dem mittleren verstärkten Bereich und einem äußeren verstärkten Bereich angeordnete geschwächte Bereiche. In den geschwächten Bereichen durchdringt dann der Kunststoff des Mitnahmeelements jeweils das textile Band, so daß sich zwischen Mitnahmeelement und textilen Band eine regelrechte Verzahnung ergibt mit einem sehr guten Verbund, der ein Abreißen der Mitnahmeelemente von dem textilen Band verhindert. Antriebsriemen der erfindungsgemäßen Art sind sehr hoch belastbar. Gleichzeitig ist insbesondere bei Verwendung der genannten Verstärkungsfasern die Dehnung des Antriebsriemens wesentlich geringer als bei herkömmlichen Kunststoff-Zahnriemen. Es hat sich gezeigt, daß das Anspritzen der Mitnahmeelemente an das textile Band eine kostengünstigere Herstellung ermöglicht als bei einem herkömmlichen einstückigen Zahnriemen. Außerdem bieten die erfindungsgemäßen Antriebsriemen vielfältige Variationsmöglichkeiten je nach Anwendungszweck, da man die unterschiedlichsten Typen textiler Bänder aus verschiedenen Geweben mit unterschiedlichen Eigenschaften verwenden kann und an diese jeweils Mitnahmeelemente aus verschiedenen Kunststoffen mit unterschiedlicher Härte und Abriebfestigkeit anspritzen kann. Man kann also beispielsweise auch weichere Kunststoffe oder Elastomere für die Mitnahmeelemente einsetzen, zum Beispiel wenn man zwischen diesen Mitnahmeelementen und einem Antriebselement keinen Formschluß sondern einen Reibungsschluß herstellen will. Die Herstellung der Mitnahmeelemente im Spritzguß ermöglicht es diesen die unterschiedlichste Form je nach gewünschtem Zahnprofil zu geben. Weiter besteht die Möglichkeit bei Bedarf zusätzlich Schaltnocken oder dergleichen an das textile Band in bestimmten Abstandspositionen anzuspritzen, die dann, wenn dieser Schaltnocken des Antriebsriemens eine bestimmte Position passiert, einen Schaltvorgang auslösen.

Die Mitnahmeelemente können gleich breit sein wie das textile Band, können dieses aber auch an beiden Seiten rechts und links jeweils ein Stück überragen.

Gemäß einer bevorzugten Weiterbildung der erfindungsgemäßen Aufgabenlösung ist vorgesehen, daß ein erfindungsgemäßer Antriebsriemen endlos ausgebildet ist. Dies kann zum Beispiel dadurch bewerkstelligt werden, daß man bei der Herstellung des endlosen Antriebsriemens zunächst zwei Enden eines textilen Bands, die frei von Mitnahmeelementen sind, übereinanderlegt, so daß sie sich überlappen und die sich überlappenden Enden in eine Form einlegt, in der dann in diesem Überlappungsbereich weitere Mitnahmeelemente angespritzt werden. Dabei kann das jeweils letzte Mitnahmeelement beider Enden des textilen Bandes vor dem Überlappungsbereich zur Fixierung und genauen Abstandspositionierung dienen, so daß die Mitnahmeelemente in dem Überlappungsbereich in dem gleichen Rasterabstand angespritzt werden wie die Mitnahmeelemente im Nichtüberlappungsbereich. In dem Überlappungsbereich liegt das textile Band dann doppelt und es entsteht eine sehr feste Verbindung der beiden Bandenden dadurch, daß beim Anspritzen der Kunststoff der Mitnahmeelemente die geschwächten Bereiche beider übereinanderliegender textiler Bandenden durchdringt. Man erhält so einen Endlosantriebsriemen mit überall im gleichen Rastermaß angespritzten Mitnahmeelementen, der auch im Verbindungsbereich eine sehr hohe Festigkeit und Belastbarkeit aufweist.

Nachfolgend wird die vorliegende Erfindung anhand von Ausführungsbeispielen unter Bezugnahme auf die beiliegenden Zeichnungen näher beschrieben. Dabei zeigen
- Fig. 1: eine Draufsicht auf einen erfindungsgemäßen Antriebsriemen gemäß einer möglichen Variante der Erfindung in vergrößerter Darstellung;
- Fig. 2: einen Schnitt quer durch den Antriebsriemen entlang der Linie II-II von Fig. 1;
- Fig. 3: einen Längsschnitt durch den Antriebsriemen entlang der Linie III-III von Fig. 1;
- Fig. 4: eine vergrößerte Darstellung eines verstärkten Bereichs des Antriebsriemens;
- Fig. 5: einen Längsschnitt durch einen Endlosantriebsriemen mit angespritzten Mitnahmeelementen im Bereich der sich überlappenden Enden.

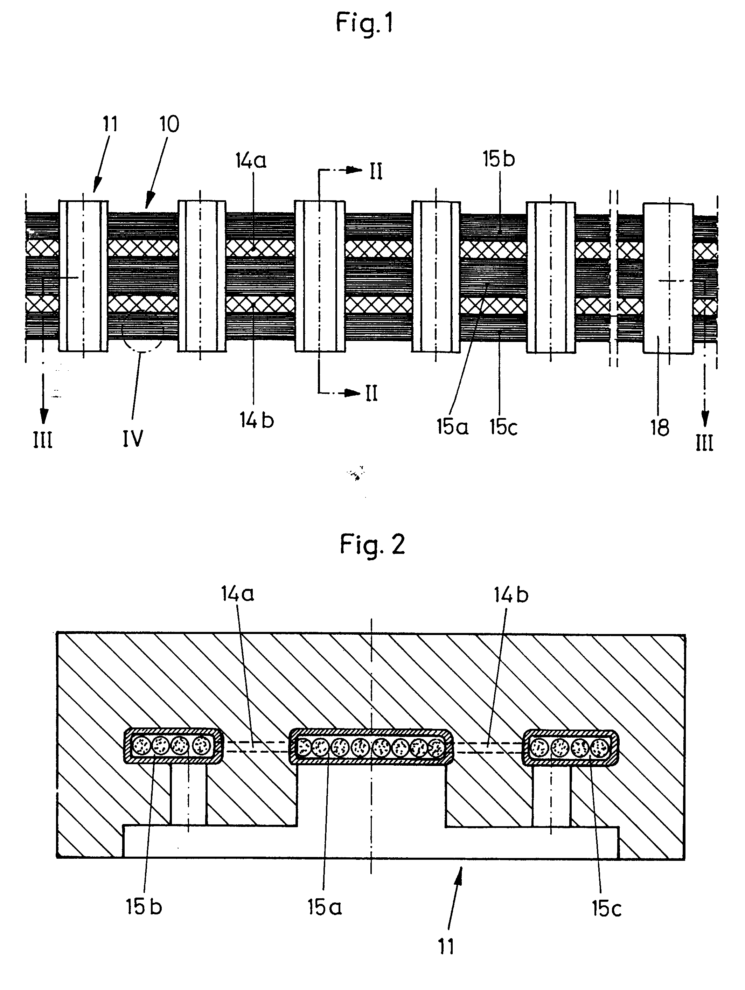

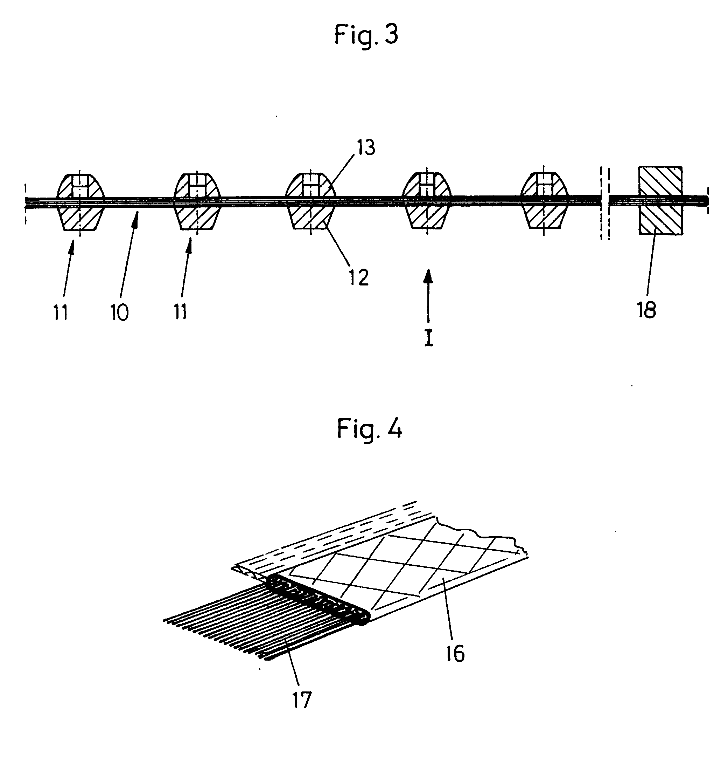

Wie man aus Fig. 1 erkennen kann, besteht der erfindungsgemäße Antriebsriemen aus einem textilen Band 10, an das in Längsrichtung des textilen Bands gesehen, in regelmäßigen Abständen angeordnete Mitnahmeelemente 11 angespritzt sind, deren Hauptabmessung sich in Querrichtung des textilen Bands 10 erstreckt. Wie man aus der Längsschnittdarstellung gemäß Fig. 3 erkennt, stehen die Mitnahmeelemente 11 nach oben und nach unten gegenüber der Ebene des textilen Bands 10 vor, daß heißt es sind nach oben vorstehende Bereiche 12 vorgesehen und nach unten vorstehende Bereiche 13. Die Oberseite des Antriebsriemens mit den nach oben vorstehenden Bereichen 12 der Mitnahmeelemente 11 ist die Eingriffseite. In dem dargestellten Ausführungsbeispiel haben, wie man aus Fig. 3 erkennt, die Mitnahmeelemente 11 an der Eingriffseite des Antriebsriemens etwa ein trapezförmiges Profil. Die Abstände der Mitnahmeelemente 11 in Längsrichtung des textilen Bands gesehen, sind so gewählt, daß sich zwischen den Mitnahmeelementen 11 Zwischenräume ergeben, die etwas breiter sind, als die Mitnahmeelemente selbst und etwa das 1 1/2-fache deren Breite betragen.

Wie man aus der Draufsicht gemäß Fig. 1 erkennt, sind in Längsrichtung des textilen Bands 10 streifenartige Bereiche vorgesehen, wobei sich zwei äußere verstärkte Bereiche 15b, 15c ergeben, ein mittlerer verstärkter Bereich 15a und zwischen diesen verstärkten Bereichen jeweils geschwächte Bereiche 14a, 14b angeordnet sind. In den geschwächten Bereichen besteht das textile Band 10 nur aus einem einlagigen Gewebe, einem sogenannten Monofil, das gitterartig ausgebildet ist. In den verstärkten Bereichen 15a, 15b, 15c besteht das textile Band im vorliegenden Ausführungsbeispiel aus schlauchförmigen Geweben. Diese Gewebeschläuche 16 sind in Fig. 4 noch einmal vergrößert dargestellt. Es handelt sich um mehrlagige dichte hochreißfeste Gewebeschläuche 16, die in ihrem Inneren Verstärkungsfasern 17, zum Beispiel Kohlenstoffasern mit relativ geringer Dehnung aufnehmen.

Die Gewebeschläuche sind UV-undurchlässig und schützen somit die Verstärkungsfasern 17 gegen Lichteinwirkung.

Dadurch daß das textile Band 10 in den geschwächten Bereichen 14a, 14b gitterartig und einlagig gewebt ist, kann dort beim Anspritzen der Mitnahmeelemente 11 der Kunststoff durch das Gitter des einlagigen Gewebes fließen. Die Mitnahmeelemente erstrecken sich also in den geschwächten Bereichen 14a, 14b von der Oberseite zur Unterseite des textilen Bands 10 durch dieses hindurch und sind daher sehr fest mit dem textilen Band 10 verbunden.

In der Darstellung gemäß Fig. 3 ist ein Schaltnocken 18 dargestellt, der an das textile Band 10 angespritzt ist und bei dessen Verwendung als Antriebsriemen einen Schaltvorgang auslöst, wenn der Schaltnocken in eine bestimmte Position gelangt. Die Form des Schaltnockens ist in der Zeichnung nur beispielhaft dargestellt und kann beliebig variieren, ebenso wie die Querschnittsform und der Umriß der Mitnahmeelemente 11.

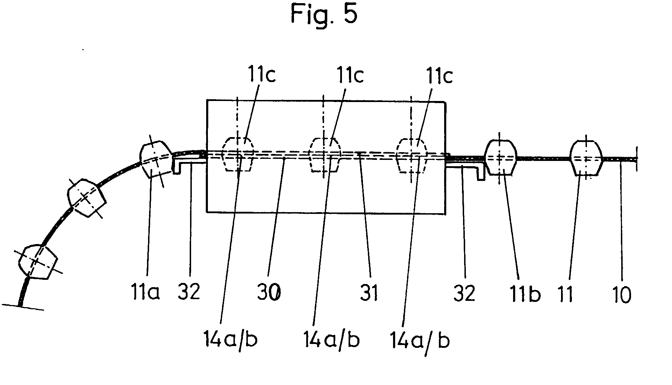

Nachfolgend wird auf Fig. 5 Bezug genommen. Die Darstellung zeigt einen Endlosantriebsriemen gemäß einer Weiterentwicklung bzw. einer alternativen Ausführungsform der Erfindung. Man kann ein textiles Band gemäß der Erfindung mit angespritzten Mitnahmeelementen an seinen beiden Enden, die man zunächst über eine gewisse Länge frei von Mitnahmeelementen läßt, übereinander legen, so daß sich diese beiden Enden 30, 31 ohne Mitnahmeelemente überlappen. Diese überlappenden Enden 30, 31 legt man dann zusammen in eine Spritzgußform ein, wobei bei beiden Enden das jeweils letzte angespritzte Mitnahmeelement 11a, 11b zur genauen Positionierung dient. Durch eine entsprechende Positioniereinrichtung 32 kann man gewährleisten, daß das Anspritzen der neuen Mitnahmeelemente im Überlappungsbereich der beiden übereinandergelegten Bänder so erfolgt, daß der Abstand des an beiden Seiten jeweils neu angespritzten Mitnahmeelements 11c zu dem jeweils letzten Mitnahmeelement 11a, 11b genau dem Abstand der übrigen Mitnahmeelemente 11 untereinander entspricht. Natürlich ist der Abstand der neu angespritzten Mitnahmeelemente 11c untereinander ebenfalls gleich diesem Abstand der übrigen Mitnahmeelemente 11 im einlagigen Bereich des textilen Bands 10. Dadurch erhält man einen einheitlichen endlosen Antriebsriemen. Die neu angespritzten Mitnahmeelemente 11c durchdringen beide sich überlappende Enden 30, 31 des textilen Bands jeweils in dem geschwächten Bereich 14, vorzugsweise handelt es sich auch hier um streifenartige geschwächte Bereiche 14a, 14b. Durch dieses Durchdringen wird eine sehr feste Verbindung der beiden sich überlappenden Enden 30, 31 des textilen Bands im Überlappungsbereich erzielt, so daß der Verbindungsbereich des Endlosantriebsriemens keine Bruchgefahr aufweist.

## Patentansprüche

1. Antriebsriemen, der ein textiles Band (10) umfaßt, an das in Längsrichtung in regelmäßigen Abständen quer zum textilen Band angeordnete Mitnahmeelemente (11) angespritzt sind, die nach wenigstens einer Seite des textilen Bandes (10) hin gegenüber dessen Ebene nach oben und/oder unten vorstehende Bereiche (12) aufweisen, dadurch gekennzeichnet, daß das textile Band (10) wenigstens einen sich in Längsrichtung erstreckenden streifenartigen Bereich (14) aufweist, in dem das Band (10) geschwächt ist und daß der Kunststoff der Mitnahmeelemente (11) das textile Band (10) in dem geschwächten Bereich (14) durchdringt.

2. Antriebsriemen nach Anspruch 1, dadurch gekennzeichnet, daß die Mitnahmeelemente (11) so an das textile Band (10) angespritzt sind, daß sie wenigstens teilweise das Gewebe des textilen Bandes (10) durchdringen und zu beiden Seiten hin gegenüber der Ebene des textilen Bandes (10) nach oben und unten vorstehende Bereiche (12, 13) aufweisen.

3. Antriebsriemen nach Anspruch 1 oder 2, dadurch gekennzeichnet, daß die zur Oberseite des textilen Bandes (10) hin vorstehenden Bereiche (12) der Mitnahmeelemente (11) so geformt sind, daß sich in Längsrichtung des Antriebsriemens ein einem Zahnriemen ähnliches Profil ergibt.

4. Antriebsriemen nach einem der Ansprüche 1 bis 3, dadurch gekennzeichnet, daß wenigstens zwei parallele streifenartige geschwächte Bereiche (14a, 14b) vorgesehen sind, die sich in Längsrichtung des textilen Bands (10) erstrecken.

5. Antriebsriemen nach einem der Ansprüche 1 bis 4, dadurch gekennzeichnet, daß neben den geschwächten Bereichen (14a, 14b) in Längsrichtung des textilen Bandes (10) verstärkte Bereiche (15) vorgesehen sind.

6. Antriebsriemen nach einem der Ansprüche 1 bis 5, dadurch gekennzeichnet, daß in den geschwächten Bereichen (14a, 14b) des textiles Bandes (10) ein einlagiges gitterartiges Gewebe (Monofil) vorgesehen ist.

7. Antriebsriemen nach einem der Ansprüche 1 bis 6, dadurch gekennzeichnet, daß in den geschwächten Bereichen (14a, 14b) des textilen Bandes (10) ein einlagiges gitterartiges Gewebe, insbesondere ein vorzugsweise gezwirntes Multifil vorgesehen ist.

8. Antriebsriemen nach einem der Ansprüche 1 bis 7, dadurch gekennzeichnet, daß das textile Band (10) in wenigstens einem der verstärkten Bereiche (15) als zwei- oder mehrlagiger Gewebeschlauch (16) ausgebildet ist, wobei dieser Gewebeschlauch (16) Verstärkungsfasern (17) in sich aufnimmt.

9. Antriebsriemen nach einem der Ansprüche 1 bis 8, dadurch gekennzeichnet, daß der Gewebeschlauch (16) aus Polyamid oder Polyester besteht.

10. Antriebsriemen nach einem der Ansprüche 1 bis 9, dadurch gekennzeichnet, daß die Verstärkungsfaser (17) Kohlenstoffasern oder andere Fasern mit einer relativ geringen Dehnung sind.

11. Antriebsriemen nach einem der Ansprüche 1 bis 10, dadurch gekennzeichnet, daß die Verstärkungsfasern aus Aramiden oder hochfestem Polyethylen bestehen.

12. Antriebsriemen nach einem der Ansprüche 1 bis 11, dadurch gekennzeichnet, daß das textile Band (10) einen mittleren verstärkten Bereich (15a), zwei äußere verstärkte Bereiche (15b, 15c) und zwei jeweils zwischen dem mittleren verstärkten Bereich und einem äußeren verstärkten Bereich angeordnete geschwächte Bereiche (14a, 14b) aufweist.

13. Antriebsriemen nach einem der Ansprüche 1 bis 12, dadurch gekennzeichnet, daß die Mitnahmeelemente (11) das textile Band (10) an beiden Seiten rechts und links jeweils ein Stück überragen.

14. Antriebsriemen nach einem der Ansprüche 1 bis 13, dadurch gekennzeichnet, daß die Mitnahmeelemente (11) in Längsrichtung des Antriebsriemens ein trapezförmiges Profil, dreieckiges Profil oder sonstiges übliches Zahnprofil aufweisen.

15. Antriebsriemen nach einem der Ansprüche 1 bis 14, dadurch gekennzeichnet, daß die Mitnahmeelemente (11) an der Eingriffseite (Oberseite) des Antriebsriemens abgerundet sind.

16. Antriebsriemen nach einem der Ansprüche 1 bis 15, dadurch gekennzeichnet, daß die Mitnahmeelemente (11) aus einem harten abriebfesten Kunststoff gespritzt sind.

17. Antriebsriemen nach einem der Ansprüche 1 bis 16, dadurch gekennzeichnet, daß das Gewebe in den verstärkten Bereiche (15) zwei- oder mehrlagig und besonders dicht gewebt ist.

18. Antriebsriemen nach einem der Ansprüche 1 bis 17, dadurch gekennzeichnet, daß an das textile Band (10) in bestimmten Positionen Schaltnocken (18) angespritzt sind.

19. Antriebsriemen nach einem der Ansprüche 1 bis 18, dadurch gekennzeichnet, daß die angespritzten Mitnahmeelemente (11) aus einem weicheren Kunststoff oder einem Elastomer bestehen und zwischen dem Antriebsriemen und einer externen Antriebselement ein Reibungsschluß hergestellt wird.

20. Antriebsriemen nach einem der Ansprüche 1 bis 19, dadurch gekennzeichnet, daß dieser endlos ausgebildet ist und zwei sich überlappende Enden (30, 31) des textilen Bands vorhanden sind und in diesem Überlappungsbereich (32) die Mitnahmeelemente (11) jeweils an beide sich überlappenden Enden (30, 31) des textilen Bandes (10) angespritzt sind und diese miteinander verbinden.

21. Antriebsriemen nach Anspruch 20, dadurch gekennzeichnet, daß der Kunststoff der Mitnahmeelemente (11) beide sich überlappende Enden (30, 31) des textilen Bands in dem jeweils geschwächten Bereich (14) durchdringt.

## Claims

1. Driving belt comprising a textile strip (10) at which in the longitudinal direction engaging elements (11) are integrally moulded at regular distances transversely to the textile strip which comprise sections (12) projecting upwardly and/or downwardly beyond the plane of the textile strip at least at one side thereof, characterised in that the textile strip (10) comprises at least one strip-like section (14) extending in the longitudinal direction at which the strip (10) is weakened and that the plastics material of the engaging elements (11) penetrates the textile strip (10) in the weakened section (14).

2. Driving belt as claimed in claim 1, characterised in that the engaging elements (11) are moulded to the textile strip (10) in such a manner that they penetrate the fabric of the textile strip (10) at least partially and comprise sections (12,13) projecting upwardly and downwardly at both sides beyond the plane of the textile strip (10).

3. Driving belt as claimed in claims 1 or 2, characterised in that the sections (12) of the engaging elements (11) projecting towards the upper side of the textile strip (10) are designed in such a manner that in the longitudinal direction of the driving belt a profile similar to a tooth belt will be achieved.

4. Driving belt as claimed in any one of claims 1 to 3, characterised in that at least two parallel strip-like weakened sections (14a, 14b) are provided which extend in the longitudinal direction of the textile strip (10).

5. Driving belt as claimed in any one of claims 1 to 4, characterised in that adjacent to the weakened sections (14a, 14b) in the longitudinal direction of the textile strip (10) there are provided reinforced sections (15).

6. Driving belt as claimed in any one of claims 1 to 5, characterised in that in the weakened sections (14a, 14b) of the textile strip (10) there is provided a single-layer latticed fabric (monofilament).

7. Driving belt as claimed in any one of claims 1 to 6, characterised in that in the weakened sections (14a, 14b) of the textile strip there is provided a single-layer latticed fabric, particularly with preference a twined multifilament.

8. Driving belt as claimed in any one of claims 1 to 7, characterised in that the textile strip (10) is designed in at least one of the reinforced sections (15) as a two-layer or multi-layer fabric hose (16), said fabric hose (16) containing reinforcing fibres (17).

9. Driving belt as claimed in any one of claims 1 to 8, characterised in that the fabric hose (16) consists of polyamide or polyester.

10. Driving belt as claimed in any one of claims 1 to 9, characterised in that the reinforcing fibres (17) are carbon fibres or other fibres with a relatively low stretch.

11. Driving belt as claimed in any one of claims 1 to 10, characterised in that the reinforcing fibres consist of aramides or highly strength polyethylene.

12. Driving belt as claimed in any one of claims 1 to 11, characterised in that the textile strip (10) comprises a central reinforced section (15a), two outer reinforced sections (15b, 15c) and two weakened sections (14a, 14b) arranged in each case between the central reinforced section and one of the outer reinforced sections.

13. Driving belt as claimed in any one of claims 1 to 12, characterised in that the engaging elements (11) project somewhat beyond the textile strip (10) at both sides for the left and for the right in each case.

14. Driving belt as claimed in any one of claims 1 to 13, characterised in that the engaging elements (11) have, in the longitudinal direction of the driving belt, a trapezoidal profile, a triangular profile or any other usual tooth profile.

15. Driving belt as claimed in any one of claims 1 to 14, characterised in that the engaging elements (11) are rounded at the contact side (upper side) of the driving belt.

16. Driving belt as claimed in any one of claims 1 to 15, characterised in that the engaging elements (11) are injection-moulded of a hard abrasion resistant plastics material.

17. Driving belt as claimed in any one of claims 1 to 16, characterised in that the fabric in the reinforced sections (15) is two-layered or multi-layered and woven particularly close.

18. Driving belt as claimed in any one of claims 1 to 17, characterised in that trip cams (18) are integrally moulded at certain positions to the textile strip (10).

19. Driving belt as claimed in any one of claims 1 to 18, characterised in that the integrally moulded engaging elements (11) consist of a softer plastics material or an elastomer and that between the driving belt and an external driving element a friction contact is made.

20. Driving belt as claimed in any one of claims 1 to 19, characterised in that this belt is made endless and there are provided two overlapping ends (30, 31) of the textile strip, and that in this overlapping region (32) the engaging elements (11) are in each case integrally moulded to both overlapping ends (30, 31) of the textile strip and connect these ends to one another.

21. Driving belt as claimed in claim 20, characterised in that the plastics material of the engaging elements (11) penetrates both overlapping ends (30, 31) of the textile strip in the respective weakened section (14).

## Revendications

1. Courroie de transmission qui comprend un ruban textile (10) auquel sont fixés par injection, en direction longitudinale et à des intervalles uniformes, des éléments d'entraînement (11) orientés transversalement au ruban textile, éléments d'entraînement qui présentent au moins d'un côté du ruban textile des portions (12) faisant protubérance vers le haut et/ou vers le bas par rapport au plan du ruban textile, caractérisée en ce que le ruban textile (10) présente au moins une zone en forme de bande (14) orientée en direction longitudinale, zone dans laquelle le ruban (10) est affaibli et en ce que la matière plastique des éléments d'entraînement (11) transperce le ruban textile (10) dans la zone affaiblie (14).

2. Courroie de transmission suivant la revendication 1, caractérisée en ce que les éléments d'entraînement (13) sont fixés par injection sur le ruban textile (10) de manière telle qu'ils traversent au moins partiellement le tissu du ruban textile (10) et présentent de part et d'autre du ruban, par rapport au plan du ruban textile (10), des portions (12, 13) faisant protubérance vers le haut et vers le bas.

3. Courroie de transmission suivant la revendication 1 ou 2, caractérisée en ce que les zones (12) des éléments d'entraînement (11) faisant protubérance sur la face supérieure du ruban textile (10) sont de forme telle que dans la direction longitudinale de la courroie de transmission est obtenu un profil similaire à celui d'une courroie crantée.

4. Courroie de transmission suivant l'une quelconque des revendications de 1 à 3, caractérisée en ce que sont prévues au moins deux zones affaiblies en forme de bandes parallèles (14a, 14b), qui sont orientées en direction longitudinale du ruban textile (10).

5. Courroie de transmission suivant l'une quelconque des revendications de 1 à 4, caractérisée en ce qu'à côté des zones affaiblies (14a, 14b) sont prévues des zones renforcées (15) en direction longitudinale du ruban textile (10).

6. Courroie de transmission suivant l'une quelconque des revendications de 1 à 5, caractérisée en ce que dans les zones affaiblies (14a, 14b) du ruban textile (10) et prévu un tissu du type maille (monofil) à un pli ou à une couche.

7. Courroie de transmission suivant l'une quelconque des revendications de 1 à 6, caractérisée en ce que dans les zones affaiblies (14a, 14b) du ruban textile (10) et prévu un tissu du type maille à un pli ou à une couche, notamment un multifil de préférence retors.

8. Courroie de transmission suivant l'une quelconque des revendications de 1 à 7, caractérisée en ce que dans au moins l'une des zones renforcées (15) le ruban textile (10) a la forme d'un tissu tubulaire (16) à deux ou plusieurs plis ou couches, ce tissu tubulaire (16) contenant des fibres de renforcement (17).

9. Courroie de transmission suivant l'une quelconque des revendications de 1 à 8, caractérisée en ce que le tissu tubulaire est constitué par du polyamide ou du polyester.

10. Courroie de transmission suivant l'une quelconque des revendications de 1 à 9, caractérisée en ce que les fibres de renforcement (17) sont des fibres de carbone ou d'autres fibres d'un allongement relativement réduit.

11. Courroie de transmission suivant l'une quelconque des revendications de 1 à 10, caractérisée en ce que les fibres de renforcement (17) sont constituées par des aramides ou par du polyéthylène extrêmement résistant.

12. Courroie de transmission suivant l'une quelconque des revendications de 1 à 11, caractérisée en ce que le ruban textile (10) présente une zone renforcée centrale (15a), deux zones renforcées extérieures (15b, 15c) et deux zones affaiblies (14a, 14b) disposées chacune entre la zone renforcée centrale et l'une des zones renforcées extérieures.

13. Courroie de transmission suivant l'une quelconque des revendications de 1 à 12, caractérisée en ce que les éléments d'entraînement (11) font protubérance d'une certaine longueur sur le ruban textile (10) des deux côtés à droite et à gauche.

14. Courroie de transmission suivant l'une quelconque des revendications de 1 à 13, caractérisée en ce que les éléments d'entraînement (11) présentent en direction longitudinale de la courroie de transmission un profil trapézoïdal, un profil triangulaire ou un autre profil denté traditionnel.

15. Courroie de transmission suivant l'une quelconque des revendications de 1 à 14, caractérisée en ce que les éléments d'entraînement (11) sont arrondies sur le côté d'engrènement (côté supérieur) de la courroie de transmission.

16. Courroie de transmission suivant l'une quelconque des revendications de 1 à 15, caractérisée en ce que les éléments d'entraînement (11) sont réalisés par injection en une matière plastique dure résistant à l'abrasion.

17. Courroie de transmission suivant l'une quelconque des revendications de 1 à 16, caractérisée en ce que dans les zones renforcées (15) le tissu est tissé en deux ou plusieurs plis ou couches et de manière particulièrement dense.

18. Courroie de transmission suivant l'une quelconque des revendications de 1 à 17, caractérisée en ce que en des endroits définis du ruban textile (10), des cames de commande (18) sont appliquées par injection sur ce ruban.

19. Courroie de transmission suivant l'une quelconque des revendications de 1 à 18, caractérisée en ce que les éléments d'entraînement (11) appliqués par injection sont constituées par une matière plastique plus tendre ou par un élastomère et en ce qu'entre la courroie de transmission et un élément de transmission extérieur est établie une liaison de friction.

20. Courroie de transmission suivant l'une quelconque des revendications de 1 à 19, caractérisée en ce qu'elle est sans fin et que deux extrémités (30, 31) en chevauchement du ruban textile sont prévues et qu'en cette zone de chevauchement (32), les éléments d'entraînement (11) sont fixés par injection sur les deux extrémités en chevauchement (30, 31) du ruban textile et relient mutuellement celles-ci.

21. Courroie de transmission suivant la revendication 20, caractérisée en ce que la matière plastique des éléments d'entraînement (11) transperce les deux extrémités en chevauchement (30, 31) du ruban textile dans les zones affaiblies (14).
